# FASCICULE DE BREVET EUROPEEN

(11) **EP 4 301 120 B1**
(45) Date de publication et mention de la délivrance du brevet: **01.10.2025**
(21) Numéro de dépôt: 22703389.1
(22) Date de dépôt: 03.02.2022
(51) Int. Cl.: A01B 1/06, A01B 33/06

(54) **ENGIN MOTORISE DESTINE AU TRAVAIL DE LA TERRE RESPECTUEUX DE LA BIODIVERSITE**
MOTORISIERTE MASCHINE ZUR BIODIVERSITÄTSFREUNDLICHEN BODENBEARBEITUNG
MOTORIZED MACHINE INTENDED FOR BIODIVERSITY-FRIENDLY TILLAGE WORK

(30) Priorité: 05.03.2021 FR 2102153
(43) Date de publication de la demande: 10.01.2024
(73) Titulaire: Pubert Henri SAS, 85110 Chantonnay (FR)
(72) Inventeur: GERBAUD, Nicolas, 85110 MONSIREIGNE (FR); VION, Peter, 85700 POUZAUGES (FR)
(74) Mandataire: Vidon Brevets & Stratégie
(86) Numéro de dépôt international: PCT/EP2022/052558
(87) Numéro de publication internationale: WO 2022/184368

(56) Documents cités:
- WO-A1-2015/060104
- CA-A1- 2 184 012
- FR-A1- 2 240 676
- FR-A1- 2 845 960
- JP-U- S58 135 203
- US-A- 4 133 389
- US-A- 4 293 041
- US-A- 5 960 889
- US-A1- 2001 000 881

## Description

### Domaine technique

Le domaine de l'invention est celui des engins motorisés de jardinage du type servant à la culture d'un jardin, d'espaces verts, de parterres ou de bacs.

Notamment, l'invention concerne les engins motorisés destinés au travail de la terre ou du sol, du type portatif ou à conducteur marchant, qui sont respectueux de la biodiversité.

### Art antérieur

Les engins motorisés destinés au travail de la terre, du type à conducteur marchant, sont commercialisés depuis de nombreuses années.

De manière classique, de tels engins sont pourvus d'outils sur les côtés opposés qui tournent dans un plan vertical, sur des axes horizontaux, dans le sens du déplacement de l'engin. Les outils retournent la terre en faisant remonter à la surface les couches inférieures de terre tout en faisant descendre les couches supérieures de terre, et en malaxant et broyant les différentes couches de terre entre elles.

Toutefois, un inconvénient de ce type d'engins est que, du fait que les couches inférieures contenant des micro-organismes remontent à la surface, un déséquilibre au niveau du sol peut apparaître. En outre, de nombreux organismes vivants tels que des vers de terre vivant dans les sols peuvent être découpés par les outils, ce qui n'est pas souhaitable du fait que de tels être vivants sont utiles à la richesse et à la fertilité du sol.

De plus, dans de tels engins motorisés, les outils tournent à des vitesses relativement élevées ce qui peut représenter un risque pour l'utilisateur, notamment dans des sols hétérogènes comportant des cailloux. En effet, ces cailloux peuvent être projetés par les outils vers l'utilisateur et représentent un risque en cas d'impact avec ce dernier.

En fonction des conditions du sol, les vibrations peuvent devenir importantes ce qui crée des désagréments de conduite et nuit au confort de l'utilisateur. Ces conditions difficiles et éprouvantes de pilotage de l'engin font que ce dernier n'est pas adapté aux personnes âgées, ni aux jeunes personnes.

Dans le document US 2001/000881 A1, on décrit un engin motorisé du genre précité dans le préambule de la revendication 1.

Ainsi, il existe un besoin d'amélioration des engins motorisés destinés au travail de la terre ou du sol.

### Exposé de l'invention

L'invention répond à ce besoin en proposant un engin motorisé selon la revendication 1 destiné au travail de la terre et du sol notamment, ledit engin comprenant :
- des moyens de préhension dudit engin situés du côté d'une première extrémité dudit engin ;
- une tête d'outil montée du côté d'une deuxième extrémité dudit engin, opposée à la première extrémité, ladite tête portant au moins deux outils ;
   - un corps reliant les première et deuxième extrémités,
   - des moyens d'entrainement en rotation desdits outils selon des sens contrarotatifs autour d'axes de rotation parallèles distincts, les axes de rotation des outils étant configurés pour qu'en configuration d'utilisation de l'engin, les outils soient situés sensiblement à la verticale de la terre ou du sol,
lesdits au moins deux outils comprenant chacun des griffes de section ronde et de forme cintrée. La conception de griffe est protectrice des vers de terre à l'inverse des fraises ou des doigts classiquement utilisé(e)s qui sont agressifs et broient tout.

Les outils qui sont contrarotatifs pénètrent le sol selon une direction sensiblement verticale.

Les outils, prenant la forme de fils cintrés hélicoïdaux ou spiroïdaux, procurent un effet d'avancement naturel qui facilite l'utilisation de la machine. Cette force tendant à faire pénétrer les outils dans la terre rend l'engin aisé à manier et ergonomique (limitation des TMS).

Cet engin motorisé pour le travail de la terre ou du sol peut être portatif. Cet engin motorisé produire un mouvement de rotation inverse des axes des outils l'un par rapport à l'autre.

Une telle invention trouve son utilité notamment pour le travail du sol ou de la terre, notamment en bacs, ou pour le traitement des jardins et espaces verts.

Selon un mode de réalisation particulier, la tête d'outil est montée de façon articulée sur le corps par le biais de moyens d'orientation, de sorte à pouvoir orienter lesdits outils dans une pluralité de positions de travail de la terre ou du sol, l'axe de rotation de la tête d'outil étant orthogonal à chacun des axes de rotation des outils.

Ainsi, dans ce mode de réalisation particulier, la position angulaire de la tête portant les outils de travail est réglable ou adaptable. Du fait que les outils soient orientables, on peut régler l'angle d'attaque des outils en fonction du type de sol à travailler.

Dans un autre mode de réalisation, la position angulaire de la tête portant les outils de travail est fixe et ne peut être ajustée.

Selon un aspect particulier de l'invention, lesdits moyens d'entrainement en rotation desdits outils sont situés du côté de la tête d'outil.

Selon une mise en œuvre particulière de l'invention, lesdits moyens d'entrainement en rotation des outils comprennent deux motoréducteurs électriques entrainant chacun en rotation un desdits outils.

Selon une autre mise en œuvre particulière de l'invention, les moyens d'entrainement en rotation des outils comprennent un unique motoréducteur électrique entrainant en rotation lesdits deux outils.

Selon un aspect particulier de l'invention, chaque outil comprend un ou plusieurs éléments pour travailler la terre ou le sol solidaires d'une première platine montée de façon réversible sur une deuxième platine reliée au motoréducteur.

Chaque outil est ainsi monté sur la tête d'outil de manière démontable par le biais d'une fixation amovible.

Selon un aspect particulier de l'invention, lesdits outils tournent à une vitesse comprise entre 25 tours/minute et 75 tours/minute, préférentiellement 50 tours/minute.

La vitesse de rotation des outils est relativement faible ce qui rend l'engin maniable. En outre la très faible vitesse de rotation de l'outil assure un travail du sol en douceur. Les outils des machines de l'art antérieur tournent à des vitesses bien supérieures.

Selon un aspect particulier de l'invention, l'engin motorisé est alimenté par une batterie électrique rechargeable.

Selon l'invention, la tête d'outil porte une barre de sécurité mobile entre au moins une position de sécurité dans laquelle l'entrainement en rotation des outils est désactivé et une position de travail dans laquelle l'entrainement en rotation des outils est activé.

Selon un aspect particulier de l'invention, lesdits moyens de préhension comprennent une poignée de préhension située du côté de la première extrémité dudit corps et une poignée de maintien située entre les première et deuxième extrémités dudit corps.

Selon un aspect particulier de l'invention, ledit corps présente une articulation permettant de plier l'engin.

Selon un aspect particulier de l'invention, l'engin motorisé est du type à conducteur marchant, notamment un motoculteur.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue en perspective d'un engin motorisé selon un mode de réalisation particulier de l'invention, en position d'utilisation ;
[Fig 2] est une vue en perspective de l'engin motorisé de la figure 1, en position de rangement, le corps de l'engin étant replié ;
[Fig 3] est une vue de détails de la tête d'outil de l'engin motorisé selon le mode de réalisation de la figure 1, la tête portant un premier type d'outil ;
[Fig 4] est une autre vue de détails de la tête d'outil de l'engin motorisé selon le mode de réalisation de la figure 1 ;
[Fig 5] est une vue de dessus de la tête d'outil de l'engin motorisé selon le mode de réalisation de la figure 1 ;
[Fig 6] est une vue de côté de la tête d'outil de l'engin motorisé selon le mode de réalisation de la figure 1 ;
[Fig 7] est une vue en perspective éclatée de la tête d'outil de l'engin motorisé selon le mode de réalisation de la figure 1 ;
[Fig 8] est une vue en perspective d'une première mise en œuvre de l'ensemble moteur et réducteur sur la tête d'outil ;
[Fig 9] est une vue en perspective d'une deuxième mise en œuvre de l'ensemble moteur et réducteur sur la tête d'outil ;
[Fig 10] est une vue en perspective d'un second type d'outil ;
[Fig 11] est une vue en perspective éclatée du second type d'outil ;
[Fig 12] est une vue en perspective éclatée du premier type d'outil pouvant être monté sur l'engin conforme à l'invention ;
[Fig 13] est une vue en perspective éclatée du premier type d'outil ;
[Fig 14] est une vue en perspective d'un troisième type d'outil pouvant être monté sur l'engin conforme à l'invention, et
[Fig 15A] à [Fig 15D] illustrent la mise en œuvre sur l'engin d'une barre de protection mobile.

### Description détaillée de modes de réalisation de l'invention

L'invention propose ainsi un engin motorisé destiné au travail de la terre ou du sol notamment, et qui est respectueux de la biodiversité. Cet engin comprend des outils mobiles en rotation selon des sens contrarotatifs autour d'axes de rotation parallèles distincts, les axes de rotation des outils s'étendant, en configuration d'utilisation de l'engin, dans des plans parallèles sensiblement perpendiculaires à la surface de la terre ou du sol.

Cet engin motorisé peut être du type à conducteur marchant, notamment un motoculteur, ou bien être portatif.

Les outils d'un tel engin sont donc disposés à la verticale ou sensiblement à la verticale du sol, et tournent en sens inverse à la manière d'un batteur de cuisine de sorte à malaxer la terre pour l'ameublir, sans provoquer d'inversion des couches de terre.

L'engin de l'invention permet ainsi de décompacter le sol et de l'aérer, sans faire remonter les couches de terre inférieures et sans tuer les micro-organismes tels que les vers de terre.

En d'autres termes, l'engin de l'invention permet de ne travailler que la couche supérieure du sol (qui peut par exemple représenter 5 à 10 cm) pour faciliter son aération, sa perméabilité à l'eau d'irrigation, et ce, tout en conservant la richesse des couches nutritives du sol.

Il est en outre ergonomique et adapté à tout type d'utilisateurs.

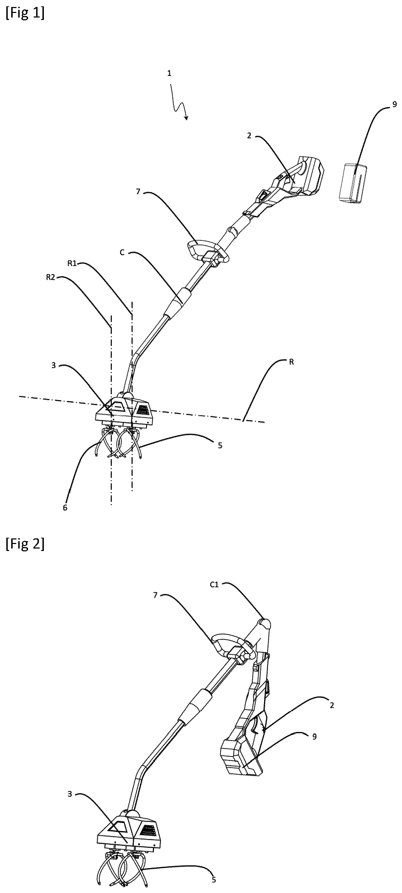

On présente maintenant, en relation avec les figures 1 à 15D, plusieurs modes de réalisation particuliers de l'invention.

Comme illustré sur ces figures, l'engin motorisé 1 selon l'invention comprend :
- un corps C ;
- des moyens de préhension 2, 7 de l'engin motorisé 1 montés à une première extrémité du corps C notamment ;
- une tête d'outil 3 montée à deuxième extrémité du corps C, opposée à la première extrémité.

Le corps C prend ici la forme d'un manche ou d'une perche tubulaire qui se termine du côté de la première extrémité en une poignée de préhension 2 munie de préférence d'un interrupteur de commande électrique. Une poignée de maintien 7 est également montée sur le corps C et est centrée entre la première extrémité et la deuxième extrémité. La poignée peut être réglable.

Comme illustré en figure 2, le corps C de l'engin est pliable au niveau d'une articulation C1 de sorte à minimiser l'encombrement de l'engin motorisé lorsque celui-ci n'est pas utilisé. Dans un autre mode de réalisation, l'engin est en deux parties.

Dans ce mode de réalisation, et comme illustré également en figure 2, l'engin motorisé est alimenté par une source d'alimentation prenant la forme d'une batterie électrique rechargeable 9 située au niveau de la première extrémité.

La tête d'outil 3 porte au moins deux outils 5, 6 de travail de la terre ou du sol qui sont entraînés par des moyens d'entrainement (moteur) qui servent à actionner en rotation 4 les deux outils. Chacun des deux outils comprend des griffes de section ronde et de forme cintrée (spiroïdale ou hélicoïdale), c'est-à-dire présentant une courbure convexe. Comme illustré par les flèches de la figure 1, ces outils 5, 6 sont mobiles en rotation dans des sens contrarotatifs autour d'axes de rotation R1, R2 parallèles distincts. En outre, les axes de rotation des outils présentent par rapport au sol, en configuration d'utilisation, un angle β compris entre 45° et 90° de sorte à ce que les outils pénètrent la terre ou le sol sensiblement à la verticale.

L'outil gauche tourne dans le sens inverse des aiguilles d'une montre et l'outil droit tourne dans le sens des aiguilles d'une montre.

Du fait des réactions opposées de l'outil droit sur le gauche, et inversement, la stabilité d'appui de l'engin motorisé est optimisée.

Les outils qui sont contrarotatifs pénètrent ainsi le sol selon une direction sensiblement verticale. Les outils, qui sont des fils cintrés, procurent un effet d'avancement naturel qui facilite l'utilisation de la machine. Cette force tendant à faire pénétrer les outils dans la terre rend l'engin aisé à manier et ergonomique (limitation des TMS).

Selon des modes de réalisation de l'invention, cet angle n'est pas réglable et la tête d'outil est ainsi montée fixe sur le corps C de l'engin motorisé. Il peut ainsi être proposé différents modèles d'engins motorisés conformes à l'invention présentant différents angles β fixes de pénétration des outils dans le sol ou la terre.

Selon un mode de réalisation décrit par la suite, la tête d'outil est montée articulée sur le corps C de l'engin motorisé de sorte à ce que cet angle β puisse être réglé par l'utilisateur entre 45° et 90°. Dans le mode de réalisation illustré notamment aux figures 1 à 4, la tête d'outil 3 est montée de façon articulée sur le corps C, par le biais de moyens d'orientation 30, de sorte à ce que l'utilisateur puisse orienter les outils 5, 6 dans une pluralité de positions de travail de la terre ou du sol. La tête d'outils est ainsi indexable.

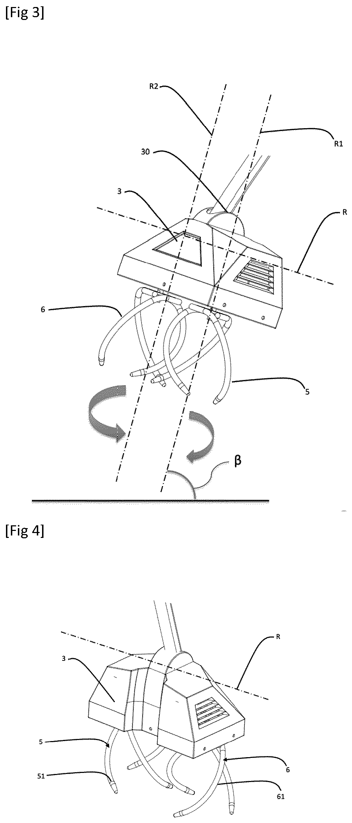

Il est à noter que l'axe de rotation R de la tête d'outil 3, illustré en figure 3, est orthogonal à chacun des axes de rotation R1, R2 des outils 5, 6.

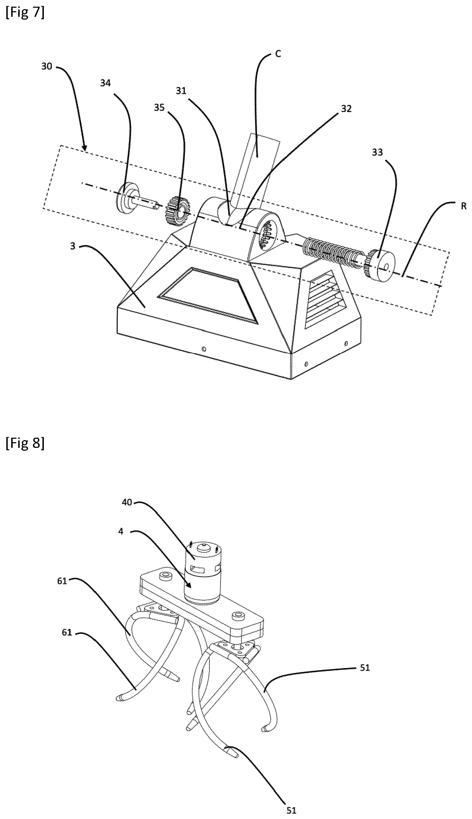

Dans ce mode de réalisation, et comme plus particulièrement illustré en figure 7, ces moyens d'orientation de la tête d'outil comprennent un cylindre 31 creux porté par l'extrémité du corps C et disposé dans un logement 32 traversant de forme complémentaire formé sur la partie supérieure de la tête d'outil.

Ces moyens d'orientation comprennent également des moyens de maintien du cylindre 31 sur la tête d'outil qui met en œuvre une tige femelle 33 traversant selon l'axe de rotation R le cylindre 31 et le logement 32 par un premier côté, la tige femelle 33 coopérant avec une tige mâle 34 traversant selon l'axe de rotation R le cylindre 31 et le logement 32 par un deuxième côté. Une roue dentée 35 est disposée entre cette tige mâle 34 et le logement 32, et la tige femelle 33 porte un ressort. Cette roue dentée 35 permet un réglage fin de l'angle d'orientation de la tête d'outil et donc des outils par rapport au sol ou à la terre en position d'utilisation.

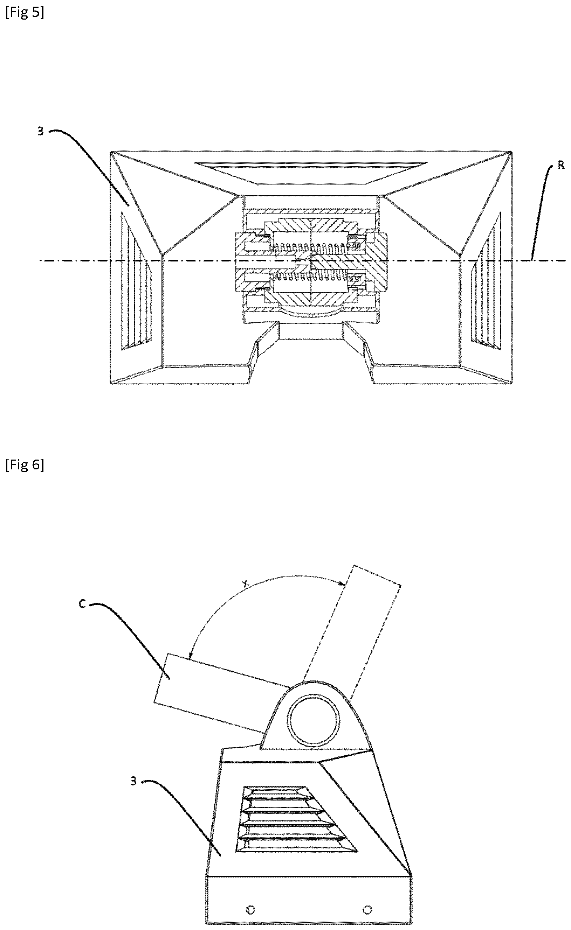

De cette manière, comme illustré en figure 6, la tête d'outil peut pivoter par rapport à la perche du corps C autour de l'axe de rotation R. La tête 3 est donc montée solidement sur le corps C et peut être orientée par l'utilisateur selon plusieurs positions de travail selon les besoins.

Dans le mode de réalisation présenté ici, l'engin motorisé présente en outre des moyens de verrouillage/déverrouillage des moyens d'orientation 30.

Ces moyens de déverrouillage peuvent par exemple prendre la forme d'une poignée de verrouillage/déverrouillage ou d'une goupille,

Comme détaillé, les outils sont entraînés en rotation par des moyens d'entrainement 4 en rotation qui sont ici situés sur la tête d'outil et qui sont alimentés par la batterie électrique située à l'autre extrémité de la perche formant corps C.

Ainsi, la motorisation est située en bout de perche du côté des outils.

Les moyens d'entrainement peuvent comprendre, selon le mode de réalisation illustré sur la figure 8 un unique motoréducteur électrique 40 qui entraine les deux outils 5, 6 en rotation. Dans ce cas de figure, ce motoréducteur électrique unique présente deux arbres de sortie rotatifs, soit un arbre pour chacun des outils.

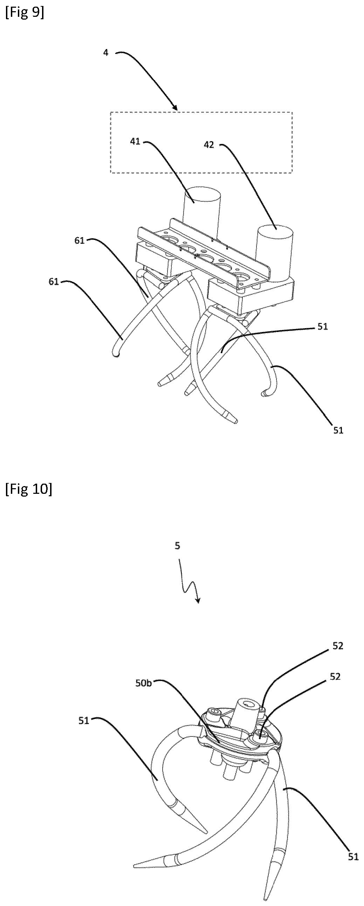

Selon le mode de réalisation illustré à la figure 9, les moyens d'entrainement comprennent deux motoréducteurs électriques 41, 42 entrainant chacun en rotation un desdits outils. Dans ce cas de figure, chacun des motoréducteurs électriques présente un arbre de sortie rotatif.

Par le biais de ce ou ces motoréducteurs électriques, les outils tournent à une vitesse comprise entre 25 tours/minute et 75 tours/minute.

Préférentiellement, les outils tournent à une vitesse d'environ 50 tours/minute.

Une telle vitesse assure une pénétration douce et progressive des outils, ici des griffes cintrées (spiroïdales ou hélicoïdales), dans la terre ou le sol.

Contrairement à l'art antérieur, où les fraises des engins tournent à environ 140 tours/minute, la faible vitesse de rotation des outils de l'engin conforme à l'invention permet de brasser et décompacter de manière douce la couche supérieure du sol. Cette faible de vitesse de rotation limite en outre les chocs et à-coups et rend l'engin motorisé beaucoup plus maniable pour l'utilisateur.

Par ailleurs, les outils tournent dans des sens de rotation inverses ce qui tend à propulser l'engin vers l'avant sur le sol. Ces outils du fait qu'ils travaillent verticalement ou sensiblement verticalement ne font pas ou peu remonter les couches de terre inférieures et n'abîment pas les vers de terre.

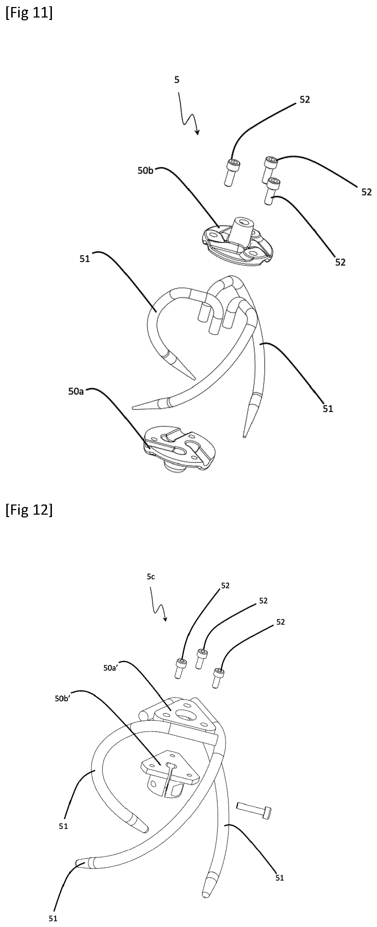

On présente une première mise en œuvre des moyens de liaison des outils avec la tête d'outil, à l'appui notamment des figures 10 et 11.

Comme illustré sur ces figures, chaque outil 5, 6 de ce mode de réalisation est monté sur une première platine 50a, elle-même montée de façon amovible sur une deuxième platine 50b solidaire d'un arbre de sortie rotatif du motoréducteur.

Il est à noter que selon différentes mises en œuvre possibles, la première platine et la deuxième platine peuvent présenter une forme circulaire, triangulaire, ovale ou polygonale par exemple.

Ici, la première platine et la deuxième platine présentent une forme circulaire.

Sur ces figures 10 et 11, chacun des outils 5, 6 présente une pluralité de griffes 51, 61 enserrées entre la première platine 50a et la deuxième platine 50b.

Ici, les griffes sont fixées sur les platines par le biais de trois vis 52 venant fixer ensemble la première platine 50a et la deuxième platine 50b.

Les outils sont ainsi interchangeables rapidement.

Comme illustré, les griffes 51, 61 présentent une forme incurvée dans le sens de la rotation de l'outil 5, 6.

Ces griffes, ici hélicoïdales ou spiroïdales et de section ronde, sont constituées de fil d'acier d'un diamètre pouvant être compris entre 6 et 12 mm suivant la puissance et la taille de l'engin motorisé. Ces fils d'acier, constituants les griffes, sont cintrés et/ou forgés de telle sorte à obtenir la forme sensiblement hélicoïdale ou spiroïdale illustrée.

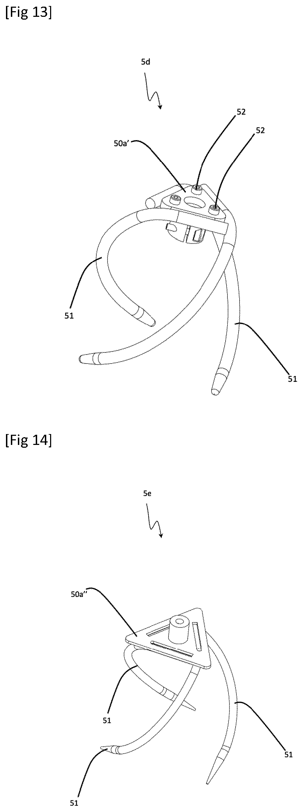

L'extrémité libre de chaque griffe peut être façonnée en pointe suivant un angle vif (figures 10 et 11, de même que figure 14), ou avec un extrémité arrondie (figures 12 et 13), selon le mode de réalisation illustré, afin d'assurer une bonne pénétration dans le sol.

Selon une variante, cette pointe peut présenter différentes portions avec des angles de cintrage différents afin de limiter l'usure de l'outil au cours de son usage.

Ici, chaque griffe présente une première portion d'extrémité venant traverser la platine 50a, prolongée par une deuxième portion s'étendant à angle droit par rapport à la première portion et disposée entre les platines 50a et 50b une fois celles-ci solidarisées, elle-même prolongée par une griffe cintrée présentant une forme hélicoïdale ou spiroïdale.

Les outils peuvent présenter plus de trois griffes ou bien uniquement une ou deux griffes.

Les deux outils juxtaposés de l'engin sont donc formés par une paire de griffes hélicoïdales ou spiroïdales entrainées en rotation, chaque griffe tournant dans le sens inverse de l'autre griffe (c'est-à-dire que les deux griffes cintrées tournent de manière contrarotative).

Chaque paire de griffes cintrées s'étend sensiblement dans le sens longitudinal du corps de l'équipement et avec un certain angle de pénétration dans le sol. Comme décrit précédemment en relation avec un mode de réalisation particulier, l'angle de pénétration des griffes hélicoïdales ou spiroïdales dans le sol peut être réglé par l'utilisateur selon la nature du sol et l'ergonomie souhaitée par l'utilisateur.

Les figures 12 et 13 montrent un montage différent des griffes qui sont ici fixées sur le bord périphérique des deux platines 50a' et 50b' qui sont de forme complémentaire triangulaire, les deux platines étant reliées par le biais de trois vis 52.

On pourrait encore prévoir, comme illustré en figure 14, une unique platine 50a" destine à être reliée au motoréducteur et sous laquelle viennent se fixer trois griffes 51.

Il est entendu que l'engin motorisé conforme à l'invention comprend une tête d'outil 3 pouvant porter deux outils ou plus.

D'autres moyens de transmission de mouvement mécanique de l'outil peuvent être mis en œuvre sans sortir du cadre de l'invention.

L'étendue de la protection est défini par les revendications annexées.

Un limiteur de couple électronique peut être mis en œuvre sur l'engin de sorte à couper l'alimentation des outils lorsqu'un pic d'intensité est détecté, ce pic survenant lorsqu'un outil est bloqué dans une pierre ou racine du sol. Un limiteur de couple mécanique peut de façon alternative être mis en œuvre et provoquer une coupure d'alimentation suivant la valeur du courant d'alimentation mesuré en continu.

La solution de l'invention peut être mise en œuvre sur une machine à conducteur marchant.

Un tel engin est adapté pour des outils de travail avec des géométries différentes (et des états de finition en bout qui sont différents : pointu ou arrondi...).

Le démontage rapide exposé plus haut permet d'utiliser l'engin avec différents accessoires (lames sarcleuse arrondi ou à double couteaux équerre, brosse de désherbage...).

Il peut être prévu un pivot d'orientation en partie haute de la perche permettant un réglage ergonomique de la perche. La perche peut être télescopique.

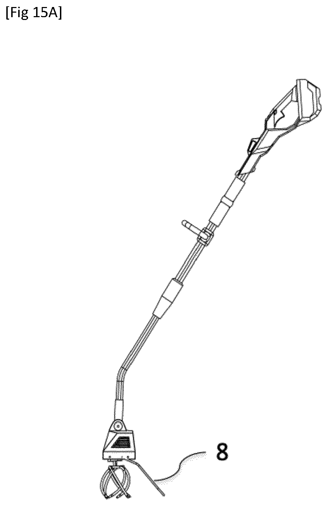

Comme illustré sur les figures 15A à 15D, une barre de protection 8 mobile peut équiper l'engin et être monté pivotante sur la tête d'outil 3. La position de la barre commande l'alimentation électrique des outils.

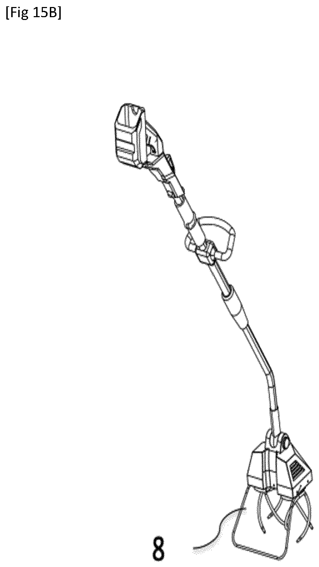

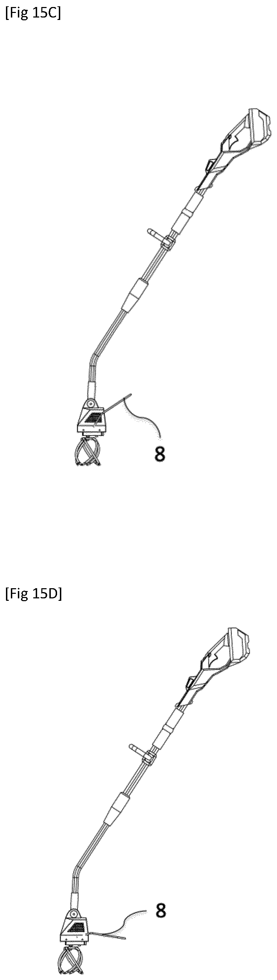

Dans une position de rangement de l'engin (figure 15A et figure 15B), la barre de protection 8 est en position basse pour poser l'équipement au sol de manière stable. Dans ce cas de figure, le circuit d'alimentation des outils est ouvert, et il est impossible de faire tourner les outils. Dans une position de travail (figure 15D), la barre est en position horizontale de sorte que les pieds de l'utilisateur restent éloignés des outils. Le circuit d'alimentation des outils est fermé, les outils pouvant être entrainés en rotation.

Les positions haute et basse (figure 15A, figure 15B et figure 15C) sont des positions de sécurité où les outils ne sont pas alimentés et ne peuvent donc pas tourner. Si la barre est percutée par une jambe ou un pied, la barre remonte ou s'abaisse selon l'angle de contact et coupe instantanément la rotation des outils.

## Revendications

1. Engin motorisé (1) destiné au travail de la terre ou du sol notamment comprenant :
- des moyens de préhension (2, 7) dudit engin situés du côté d'une première extrémité dudit engin ;
- une tête d'outil (3) montée du côté d'une deuxième extrémité dudit engin, opposée à la première extrémité, ladite tête portant au moins deux outils (5, 6) ;
- un corps (C) reliant les première et deuxième extrémités,
- des moyens d'entrainement en rotation (4) desdits outils (5, 6) selon des sens contrarotatifs autour d'axes de rotation (R1, R2) parallèles distincts, les axes de rotation des outils s'étendant, en configuration d'utilisation de l'engin, dans des plans parallèles sensiblement perpendiculaires à la surface de la terre ou du sol,
lesdits au moins deux outils (5, 6) comprenant chacun des griffes de section ronde et de forme cintrée, **caractérisé en ce que** la tête d'outil (3) porte une barre de sécurité (8) mobile entre au moins une position de sécurité dans laquelle l'entrainement en rotation des outils (5, 6) est désactivé et une position de travail dans laquelle l'entrainement en rotation des outils (5, 6) est activé.

2. Engin motorisé (1) selon la revendication 1, **caractérisé en ce que** la tête d'outil (3) est montée de façon articulée sur le corps (C) par le biais de moyens d'orientation (30), de sorte à pouvoir orienter lesdits outils (5, 6) dans une pluralité de positions de travail de la terre ou du sol, l'axe de rotation (R) de la tête d'outil (3) étant orthogonal à chacun des axes de rotation (R1, R2) des outils (5, 6).

3. Engin motorisé (1) selon la revendication 1 ou 2, **caractérisé en ce que** lesdits moyens d'entrainement en rotation (4) desdits outils (5, 6) sont situés du côté de la tête d'outil.

4. Engin motorisé (1) selon la revendication 3, **caractérisé en ce que** lesdits moyens d'entrainement en rotation (4) des outils comprennent deux motoréducteurs électriques (41, 42) entrainant chacun en rotation un desdits outils (5, 6).

5. Engin motorisé (1) selon la revendication 3, **caractérisé en ce que** les moyens d'entrainement en rotation (4) des outils comprennent un unique motoréducteur électrique (40) entrainant en rotation lesdits deux outils (5, 6).

6. Engin motorisé (1) selon la revendication 4 ou 5, **caractérisé en ce que** chaque outil (5, 6) comprend un ou plusieurs éléments pour travailler la terre ou le sol solidaires d'une première platine (50a) montée de façon réversible sur une deuxième platine (50b) reliée au motoréducteur (40, 41, 42).

7. Engin motorisé (1) selon l'une des revendications précédentes, **caractérisé en ce que** lesdits outils (5, 6) tournent à une vitesse comprise entre 25 tours/minute et 75 tours/minute, préférentiellement 50 tours/minute.

8. Engin motorisé (1) selon l'une des revendications précédentes, **caractérisé en ce qu'**il est alimenté par une batterie électrique rechargeable (9).

9. Engin motorisé (1) de motoculture selon l'une des revendications précédentes, **caractérisé en ce que** lesdits moyens de préhension (2, 7) comprennent une poignée de préhension (2) située du côté de la première extrémité dudit corps et une poignée de maintien (7) située entre les première et deuxième extrémités dudit corps (C).

10. Engin motorisé (1) selon l'une des revendications précédentes, **caractérisé en ce que** ledit corps (C) présente une articulation (C1) permettant de plier l'engin.

11. Engin motorisé (1) selon l'une des revendications précédentes, **caractérisé en ce qu'**il est du type à conducteur marchant, notamment un motoculteur.

## Patentansprüche

1. Motorisierte Maschine (1), die für die Bearbeitung des Erdreichs oder des Bodens bestimmt ist, insbesondere umfassend:
- Mittel zum Erfassen (2, 7) der Maschine, die sich auf der Seite eines ersten Endes der Maschine befinden;
- einen Werkzeugkopf (3), der auf der Seite eines zweiten Endes der Maschine, das dem ersten Ende entgegengesetzt ist, montiert ist, wobei der Kopf mindestens zwei Werkzeuge (5, 6) umfasst;
- einen Körper (C), der das erste und das zweite Ende verbindet,
- Mittel für den Drehantrieb (4) der Werkzeuge (5, 6) in gegenläufige Drehrichtungen um getrennte parallele Drehachsen (R1, R2), wobei sich die Drehachsen der Werkzeuge in Verwendungsaufstellung der Maschine in parallelen Ebenen im Wesentlichen senkrecht auf die Oberfläche des Erdreichs oder des Bodens erstrecken,
wobei die mindestens zwei Werkzeuge (5, 6) jeweils Krallen mit rundem Querschnitt und von gebogener Form umfassen, **dadurch gekennzeichnet, dass** der Werkzeugkopf (3) einen Sicherheitsbalken (8) trägt, der zwischen mindestens einer Sicherheitsstellung, in der der Drehantrieb der Werkzeuge (5, 6) deaktiviert ist, und einer Arbeitsstellung, in der der Drehantrieb der Werkzeuge (5, 6) aktiviert ist, beweglich ist.

2. Motorisierte Maschine (1) nach Anspruch 1, **dadurch gekennzeichnet, dass** der Werkzeugkopf (3) gelenkig auf dem Körper (C) über Ausrichtungsmittel (30) montiert ist, um die Werkzeuge (5, 6) in einer Vielzahl von Stellungen zur Bearbeitung des Erdreichs oder des Bodens ausrichten zu können, wobei die Drehachse (R) des Werkzeugkopfes (3) zu jeder der Drehachsen (R1, R2) der Werkzeuge (5, 6) orthogonal ist.

3. Motorisierte Maschine (1) nach Anspruch 1 oder 2, **dadurch gekennzeichnet, dass** die Mittel für den Drehantrieb (4) der Werkzeuge (5, 6) auf der Seite des Werkzeugkopfes angeordnet sind.

4. Motorisierte Maschine (1) nach Anspruch 3, **dadurch gekennzeichnet, dass** die Mittel für den Drehantrieb (4) der Werkzeuge zwei Elektrogetriebemotoren (41, 42) umfassen, die jeweils eines der Werkzeuge (5, 6) in Drehung antreiben.

5. Motorisierte Maschine (1) nach Anspruch 3, **dadurch gekennzeichnet, dass** die Mittel für den Drehantrieb (4) der Werkzeuge einen einzigen elektrischen Elektrogetriebemotor (40) umfassen, der die zwei Werkzeuge (5, 6) in Drehung antreibt.

6. Motorisierte Maschine (1) nach Anspruch 4 oder 5, **dadurch gekennzeichnet, dass** jedes Werkzeug (5, 6) ein oder mehrere Elemente zur Bearbeitung des Erdreichs oder des Bodens umfasst, die mit einer ersten Platte (50a) verbunden sind, die umkehrbar auf einer zweiten Platte (50b), die mit dem Getriebemotor (40, 41, 42) verbunden ist, montiert ist.

7. Motorisierte Maschine (1) nach einem der vorhergehenden Ansprüche, **dadurch gekennzeichnet, dass** sich die Werkzeuge (5, 6) mit einer Geschwindigkeit zwischen 25 Umdrehungen/Minute und 75 Umdrehungen/Minute, vorzugsweise mit 50 Umdrehungen/Minute, drehen.

8. Motorisierte Maschine (1) nach einem der vorhergehenden Ansprüche, **dadurch gekennzeichnet, dass** sie mit einer aufladbaren elektrischen Batterie (9) gespeist wird.

9. Motorisierte Maschine (1) für Kleingeräte nach einem der vorhergehenden Ansprüche, **dadurch gekennzeichnet, dass** die Mittel zum Erfassen (2, 7) einen Griff (2) zum Erfassen, der sich auf der Seite des ersten Endes des Körpers befindet, und einen Haltegriff (7), der sich zwischen dem ersten und dem zweiten Ende des Körpers (C) befindet, umfassen.

10. Motorisierte Maschine (1) nach einem der vorhergehenden Ansprüche, **dadurch gekennzeichnet, dass** der Körper (C) ein Gelenk (C1) aufweist, das es ermöglicht, die Maschine einzuklappen.

11. Motorisierte Maschine (1) nach einem der vorhergehenden Ansprüche, **dadurch gekennzeichnet, dass** sie handgeführt, insbesondere eine Fräse, ist.

## Claims

1. A motor-driven machine (1) for working the ground or soil especially comprising:
- gripping means (2, 7) for gripping said machine located on the side of a first end of said machine;
- a tool head (3) mounted on the side of a second end of said machine, opposite to the first end, said head carrying at least two tools (5, 6);
- a body (C) connecting the first and second ends,
- means (4) for rotatably driving said tools (5, 6) along counter-rotating directions about distinct parallel axes of rotation (R1, R2), the axes of rotation of the tools extending, when the machine is configured for use, in parallel planes substantially perpendicular to the surface of the earth or ground,
said at least two tools (5, 6) each comprising claws with a round cross-section and curved shape, **characterised in that** the tool head (3) carries a safety bar (8) movable between at least one safety position in which the rotary drive of the tools (5, 6) is deactivated and a work position in which the rotary drive of the tools (5, 6) is activated.

2. The motor-driven machine (1) according to claim 1, **characterised in that** the tool head (3) is hingedly mounted to the body (C) by means of orientation means (30), so as to be able to orientate said tools (5, 6) in a plurality of positions for working the earth or the ground, the axis of rotation (R) of the tool head (3) being orthogonal to each of the axes of rotation (R1, R2) of the tools (5, 6).

3. The motor-driven machine (1) according to claim 1 or 2, **characterised in that** said means for rotatably driving (4) said tools (5, 6) are located on the tool head side.

4. The motor-driven machine (1) according to claim 3, **characterised in that** said means (4) for rotatably driving the tools comprise two electric motor reducers (41, 42) each rotatably driving one of said tools (5, 6).

5. The motor-driven machine (1) according to claim 3, **characterised in that** the means (4) for rotatably driving the tools comprise a single electric motor reducer (40) rotatably driving said two tools (5, 6).

6. The motor-driven machine (1) according to claim 4 or 5, **characterised in that** each tool (5, 6) comprises one or more elements for working the ground or soil integral with a first stage (50a) reversibly mounted to a second stage (50b) connected to the motor reducer (40, 41, 42).

7. The motor-driven machine (1) according to one of the preceding claims, **characterised in that** said tools (5, 6) rotate at a speed of between 25 revolutions/minute and 75 revolutions/minute, preferably 50 revolutions/minute.

8. The motor-driven machine (1) according to one of the preceding claims, **characterised in that** it is powered by a rechargeable electric battery (9).

9. The motor-driven machine (1) for mechanised farming according to one of the preceding claims, **characterised in that** said gripping means (2, 7) comprise a gripping handle (2) located on the side of the first end of said body and a holding handle (7) located between the first and second ends of said body (C).

10. The motor-driven machine (1) according to one of the preceding claims, **characterised in that** said body (C) has a hinge (C1) enabling the machine to be folded.

11. The motor-driven machine (1) according to one of the preceding claims, **characterised in that** it is of the walk-behind type, especially a cultivator.
